# EUROPEAN PATENT SPECIFICATION

(11) **EP 0 376 634 B1**
(45) Date of publication and mention of the grant of the patent: **17.03.1993**
(21) Application number: 89313467.6
(22) Date of filing: 21.12.1989
(51) Int. Cl.: B01D 19/02

(54) **Foam-breaking device**
Vorrichtung zum Schaumzerstören
Dispositif de destruction de mousse

(30) Priority: 29.12.1988 JP 170958/88
(43) Date of publication of application: 04.07.1990
(73) Proprietor: JAPAN GORE-TEX, INC., Setagaya-ku Tokyo 156 (JP)
(72) Inventor: Chikamori, Yoshihiro c/o Japan Gore-Tex, Inc., Wake-Gun Okayama-Ken 709-02 (JP); Shibata, Yoshihiko c/o Japan Gore-Tex, Inc., Wake-Gun Okayama-Ken 709-02 (JP); Shimizu, Yoichi c/o Japan Gore-Tex, Inc., Wake-Gun Okayama-Ken 709-02 (JP)
(74) Representative: McCallum, William Potter

(56) References cited:
- EP-A- 0 067 116
- EP-A- 0 155 115
- DE-A- 2 163 666
- DE-A- 3 304 951
- DE-U- 7 609 344
- FR-A- 1 589 098

## Description

The present invention relates to a foam-breaking device which is capable of bursting gas bubbles in liquids and removing the gas components from the liquids without using a chemical defoaming agent. Such a device can be used to remove bubbles from liquids in bio-reactors, water-cleaning plants, papermaking plants, alcohol manufacturing processes, and other processes.

In situations where gas bubbles generated in or mixed with treated liquids are undesirable, such as in industries using biological organisms, water-cleaning plants, papermaking plants and alcohol intermediate manufacturing processes, defoaming agents are conventionally added to said treated liquids in order to eliminate or decrease the quantity of the gas bubbles.

Such conventional techniques using defoaming agents considerably increase operating costs.

Furthermore, the addition of defoaming agents generally diminishes the detergent effect of surfactants, and can cause reactions other than those intended. This is especially true in the case of bioreactors and alcohol intermediate manufacturing processes. In such cases, therefore, the treatment process can become difficult or complicated when defoaming agents are added. Also, the effect of the treatment performed in such treatment processes is often diminished. In German Patent Specification DE-A-2163666 there is described a proceess of breaking up a foam by the use of a device comprising a heating element.

According to the present invention there is provided a foam-breaking device comprising a heating element, characterized in that the heating element is sealed within a synthetic resin membrane body so that the element is protected from the environment outside the device, the membrane being porous so that it is permeable to gases but not to liquids.

Preferably the heating element is disposed between two layers of the synthetic resin membrane, the layers being sealed together at positions around the heating element to enclose the element.

In use, the device is set up (at a prescribed spacing) in a liquid which is subject to foaming, supported by the porous resin membrane of the device, and the heating element is operated to increase the temperature of the gas in gas bubbles present in the liquid. This increases the gas pressure and alters the surface tension so that the bubbles burst. The gas from the burst bubbles is discharged through the pores of the porous synthetic resin membrane so that there is no rise in the internal pressure of the apparatus.

The porous structure of the membrane is such as to prevent the passage of liquids, and also prevents the admixture of impurities or invasion of the liquid by saprophytes, etc., from the outside.

An embodiment of the invention will now be described, by way of example, with reference to the accompanying diagrammatic drawings, in which:-
Figure 1 is a plan view of a heater element for one example of a foam-breaking device in accordance with the invention;
Figure 2 is a transverse section through the device showing the heater element of Figure 1 in position on a porous resin membrane of the device;
Figure 3 is a part sectional, part elevational edge view of the device of Figure 2; and
Figure 4 is a sectional view of an apparatus illustrating the use of the device of Figures 1 to 3.

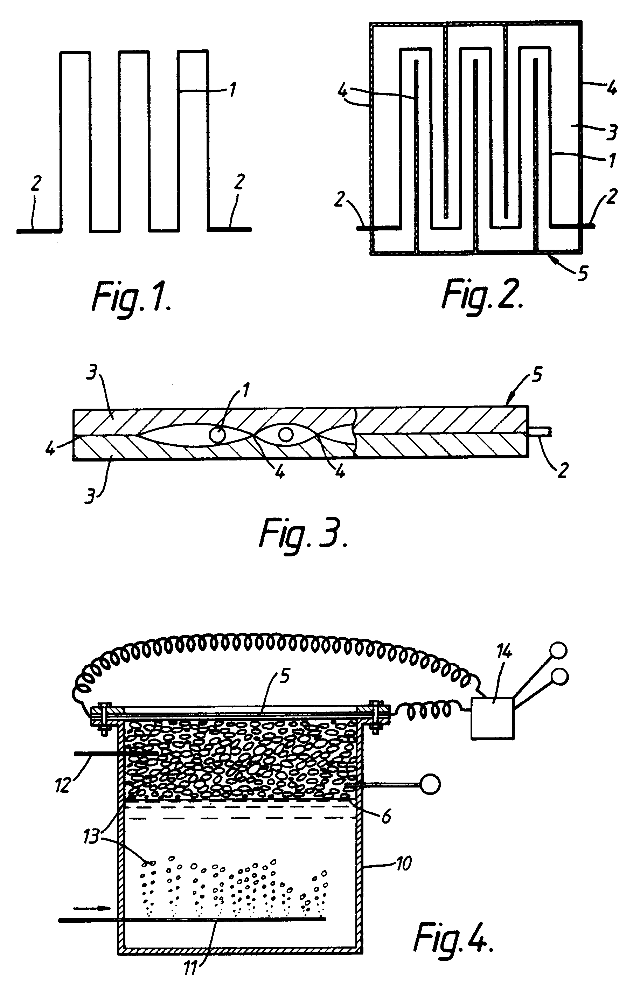

As is shown in Figure 1, a heater element (1) is formed by an electrical resistance conductor wire having a connecting conductor (2) at each end, the element following a meandering or labyrinthine path. As is shown in Figure 2, the heater element (1) is mounted on a synthetic resin membrane (3) which is porous so that it is permeable to gases, but impermeable to liquids. One example of such a porous synthetic resin membrane is a polytetrafluoroethylene membrane with a porous structure, such as is obtained by stretching as described in US-A-3,953,566. In such stretching, a film of the polytetrafluoroethylene resin is fibrilized, thus producing a structure in which countless fine fibrils are formed in a spider's web pattern between numerous micronodes. As a result, a porous membrane material is obtained in which the diameter of the pores formed between the said fibrils is 1 µm. or less, this small pore size acting in conjunction with the water-repellent properties of the material itself to render the membrane permeable to gasses but impermeable to liquids.

The aforementioned heater element (1) is in fact installed between two similar sheets of the porous synthetic resin membrane (3), which are sealed together in certain areas as shown at (4) forming non-porous portions. These portions (4) can be formed by localized fusing of areas of the membranes (3) originally formed with a porous structure. The sealed non-porous portions (4) enclose the heater element as shown and prevent leakage, even in cases where the temperature of the heater (1) drops so that bubbles contact the porous membrane (3) and allow surfactants, etc., to enter the porous structure.

Thus, the foam-breaking device as shown in Figures 1 to 3 is preferably formed by sandwiching the heater element (1) between two porous polytetrafluoroethylene membranes (3) having a pore size of 0.2 microns, a porosity of approximately 80% and a thickness of 50 microns, and sealing the membranes together around the heater (1) to form non-porous areas (4).

To test the performance of the device (5) so formed, the device was installed over the open top of a vessel (10) as shown in Figure 4, the vessel having a bubbling pipe (11) installed near the bottom. Water containing a surfactant at a concentration of 1% was placed in the vessel (10) and, at the same time, air was blown in via the pipe (11) at a pressure of 980.665 x 10² N/m² (1.0 kg.cm²) so that bubbles (13) were generated between the liquid surface (6) and the device (5). An electric current was passed through the heater element (1) of the device by an electrical power source (14) and connecting wires connected to the end conductors of the heating element, and the device was thereby heated. The temperature of the foam in the vessel was monitored by temperature-measuring means (12), and the foam-breaking performance of the device (5) was evaluated.

A desirable foam-breaking action was observed. Furthermore, in spite of the fact that air was blown in at a pressure of 980.665 x 10² N/m² (1.0 kg/cm²) as described above, the pressure inside the vessel (10) remained about 98.067 x 10² N/m² (0.1 kg/cm²). Thus, it was confirmed that air from the burst bubbles was effectively discharged to the outside via the porous membrane structure of the device (5).

As described above, the present invention makes it possible to obtain a desirable foam-breaking action without using a defoaming agent. Furthermore, sufficient gas discharge is achieved so that a stable foam-breaking effect can be achieved, and moreover, the device in accordance with the invention is inexpensive and has no deleterious effect on surfactants or the like.

## Claims

1. A foam-breaking device (5) comprising a heating element (1), characterized in that the heating element (1) is sealed within a synthetic resin membrane body (3) so that the element is protected from the environment outside the device, the membrane (3) being porous so that it is permeable to gases but not to liquids.

2. A device according to claim 1, in which the heating element (1) is disposed between two layers of the synthetic resin membrane (3), the layers being sealed together at positions around the heating element (1) to enclose the element.

3. A device according to claim 2, in which the heating element (1) follows a labyrinthine path and the layers of the synthetic resin membrane (3) are sealed together so that the element (1) is enclosed in a corresponding labyrinthine pocket formed by the membrane layers.

4. A device according to any one of the preceding claims, in which the synthetic resin membrane is of porous polytetrafluoroethylene.

5. A device according to claim 4, in which the porous polytetrafluoroethylene membrane has a pore size of about 0.2 µm. and a porosity of about 80%.

6. A method of breaking a foam comprising placing a device (5) according to any one of the preceding claims in contact with the foam and heating the heating element (1).

## Patentansprüche

1. Schaumbrechende Vorrichtung (5) mit einem Heizelement (1), **dadurch gekennzeichnet,** daß das Heizelement (1) innerhalb eines aus synthetischem Harz bestehenden Membran-Körpers (3) eingeschlossen ist, so daß das Element gegenüber der Umgebung außerhalb der Vorrichtung geschützt ist, wobei die Membrane (3) porös ist, so daß sie durchlässig für Gase, aber nicht für Flüssigkeiten ist.

2. Vorrichtung nach Anspruch 1, bei welcher das Heizelement (1) zwischen zwei Schichten der Synthetikharz-Membrane (3) angeordnet ist, wobei die Schichten in Positionen um das Heizelement (1) herum miteinander versiegelt sind, um das Element einzuschließen.

3. Vorrichtung nach Anspruch 2, bei welcher das Heizelement (1) einem labyrinthartigen Weg folgt und die Schichten der Synthetikharz-Membrane (3) miteinander so versiegelt sind, daß das Element (1) innerhalb einer entsprechenden durch die Membran-Schichten gebildeten, labyrinthartigen Tasche eingeschlossen ist.

4. Vorrichtung nach einem der vorhergehenden Ansprüche, bei welcher die Synthetikharz-Membrane aus porösem Polytetrafluoräthylen besteht.

5. Vorrichtung nach Anspruch 4, bei welcher die aus porösem Polytetrafluoräthylen bestehende Membrane eine Porengröße von ungefähr 0,2 µm und eine Porosität von ungefähr 80 % aufweist.

6. Verfahren zum Brechen von Schaum durch Anordnen einer Vorrichtung (5) entsprechend einem der vorhergehenden Ansprüche in Berührung mit dem Schaum und durch Aufheizen des Heizelementes (1).

## Revendications

1. Dispositif de destruction de mousse (5) comprenant un élément chauffant (1), caractérisé en ce que l'élément chauffant (1) est scellé dans un corps de membrane en résine synthétique (3) de sorte que l'élément est protégé de l'environnement à l'extérieur du dispositif, la **membrane (3) étant poreuse** de sorte qu'elle est perméable aux gaz, mais non aux liquides.

2. Dispositif selon la revendication 1, dans lequel l'élément chauffant (1) est disposé entre deux couches de membrane en résine synthétique (3), les couches étant hermétiquement réunies aux emplacements autour de l'élément chauffant (1) pour enfermer cet élément.

3. Dispositif selon la revendication 2, dans lequel l'élément chauffant (1) suit un trajet labyrinthique et les couches de membrane en résine synthétique (3) sont hermétiquement réunies de sorte que l'élément (1) est enfermé dans une poche labyrinthique correspondante formée par les couches de membrane.

4. Dispositif selon l'une quelconque des revendications précédentes, dans lequel la membrane en résine synthétique est en polytetrafluoréthylène poreux.

5. Dispositif selon la revendication 4, dans lequel la membrane en polytetrafluoréthylène poreux présente une grosseur de pores d'environ 0,2 µm et une porosité d'environ 80%.

6. Procédé de destruction de mousse qui consiste à placer un dispositif (5) selon l'une quelconque des revendications précédentes en contact avec la mousse et à chauffer l'élément chauffant (1).
